# EUROPÄISCHE PATENTSCHRIFT

(11) **EP 1 275 263 B1**
(45) Veröffentlichungstag und Bekanntmachung des Hinweises auf die Patenterteilung: **25.05.2005**
(21) Anmeldenummer: 01921187.9
(22) Anmeldetag: 14.03.2001
(51) Int. Cl.: H04Q 7/38

(54) **VERFAHREN ZUR BEREITSTELLUNG VON ORTSINFORMATION**
METHOD FOR MAKING AVAILABLE LOCATION INFORMATION
PROCEDE DE MISE A DISPOSITION D'INFORMATIONS DE POSITION

(30) Priorität: 17.04.2000 DE 10018999
(43) Veröffentlichungstag der Anmeldung: 15.01.2003
(73) Patentinhaber: SIEMENS AKTIENGESELLSCHAFT, 80333 München (DE)
(72) Erfinder: BERG, Andreas, 13591 Berlin (DE)
(86) Internationale Anmeldenummer: PCT/DE2001/000967
(87) Internationale Veröffentlichungsnummer: WO 2001/080586

(56) Entgegenhaltungen:
- EP-A- 0 782 352
- US-A- 5 895 436
- US-A- 6 044 263

## Beschreibung

### Fachgebiet der Erfindung

Ortsabhängige IN Dienste gewinnen mehr und mehr an Bedeutung. Für MTC-IN-Dienste (MTC - Mobile Terminating Call, Rufe zu einem Teilnehmer eines Mobilen Telefonnetzes, IN - Intelligentes Netz), die den Aufenthaltsort des angerufenen B-Teilnehmers auswerten, kann höchstmögliche Genauigkeit bei der Ortsbestimmung des IN Kundens gefordert sein. Es soll für den IN Diensteablauf die genaue Ortsinformation, z. B. in Form von einer "Location Area" und einer "Serving Cell ID" (d. h. die Zelle des zellular aufgebauten Telefonnetzes, in welcher sich ein Teilnehmer gerade befindet) des B-Teilnehmers festgestellt werden.

### Stand der Technik

Bisher steht der Dienstezentrale (SCP, Service Control Point) eines Intelligenten Netzes IN bei MTCs über eine Abfrage "AnyTimeInterrogation" (ATI, die in der Norm GSM 03.78 beschrieben ist) bzw. "StandardInterrogation" lediglich die VLR (Visitor Location Register) Nummer zur Verfügung. Diese Ortsinformation ist für die meisten IN-Anwendungen zu ungenau, da eine VLR Nummer den gesamten Einzugsbereich einer MSC (Mobile Switching Center, Vermittlungsstation in einem Mobilfunknetz) repräsentiert.
Wird auch das Besucherregister VLR befragt, beispielsweise mit den Befehlen "ProvideRoamingNumber" oder "ProvideSubscriberInfo" so stehen dann zwar genauere Ortsinformationen wie z. B. die "Cell ID" und/oder "Location Area Identity" (LAI), "Location Number" (LN) zur Verfügung, sie stammen aber von dem letzten Kontakt mit dem Mobiltelefon.

Das Alter dieser Information ist im Parametersatz unter "AgeOfLocationInformation" hinterlegt. Dieser Wert kann in einem IN Dienst herangezogen werden um zu entscheiden, ob die Ortsinformation noch verwendet werden kann, oder bereits zu veraltet ist, an aktuellere Ortsinformationen gelangt man mit dieser Information aber nicht.
Die zu dem MTC-Dienst aktuelle "Cell ID" bzw. "Location Number" können zur Zeit nur in der Nachbearbeitung (Postprocessing) von Vergebührungstickets ausgewertet werden, aber nicht durch den IN-Dienst, direkt vor dem Telefonat.

Bei MTCs kann es notwendig sein, den Aufenthaltsort des B-Teilnehmers möglichst genau zu kennen. Wenn die Information der "Serving Cell ID" und die "Location Area" genau festgestellt und der Dienstezentrale SCP mitgeteilt werden kann, so können ortsabhängige MTC-IN-Dienste höchst granular auf den Aufenthaltsort des B-Teilnehmers reagieren. So können neue Telekommunikations-Dienste angeboten werden, für die eine genaue Ortsinformation notwendig ist.

Weitere sehr aufwendige Lösungen sind für die Ortsbestimmung im Gespräch. Diese verlangen von den Netzbetreibern jedoch, mit kostspieliger Infrastruktur das Netz aufzurüsten (zum Beispiel "Time Of Arrival" oder "Enhanced Observed Time Difference") oder die Endgeräte, also die Mobiltelefon anzupassen, beispielsweise mit einem sogenannten "SIM Application Toolkit" oder auch mit anderen bekannten Ortsinformationssystemen wie dem Global Positioning System GPS. Diese Methoden können ein Endgerät in einem Telekommunikationsnetz genauer orten, doch der finanzielle und technische Aufwand, der betrieben werden muß, um diese genauere Information zu erhalten, ist beträchtlich.

Aufgabe der Erfindung ist es, genauere Ortsinformationen mit möglichst wenig Aufwand zu ermitteln. Eine weitere Aufgabe der Erfindung ist es, einem IN-Dienst genauere Ortsinformationen zur Verfügung zu stellen.

### Darstellung der Erfindung

Diese Aufgabe wird mit dem Verfahren nach Anspruch 1 gelöst, indem diese Ortsinformation in folgenden Schritten ermittelt wird:
a) einer ersten Nachricht, die vom SCP an das gesuchte Endgerät adressiert und abgesendet wird. Diese erste Nachricht wird von dem Teilnehmerverzeichnis weitergeleitet und löst gleichzeitig eine Aktualisierung der im Teilnehmerverzeichnis enthaltenen Ortsinformation aus, sofern eine Ermittlung des Teilnehmers erfolgreich war. Zur Ortsinformation existiert eine Angabe, wann diese Ortsinformation ermittelt / erstellt wurde. Diese Alters-Information wird ebenfalls aktualisiert.
b) Dann wird eine zweite Nachricht ebenfalls von der Dienstezentrale abgesendet. Mittels dieser Nachricht fragt die Dienstezentrale nun die gespeicherte Ortsinformation und Alters-Information in dem Teilnehmerverzeichnis ab. Die Alters-Information zeigt an, ob die gelieferte Orts-Information aktuell ist.
c) Ist die ermittelte Ortsinformation als aktuell identifiziert, wird sie von der Dienstezentrale ausgewertet und für weitere Zwecke, beispielsweise einen ortsabhängigen MTC-IN-Dienst angewendet.
d) Anderenfalls kann daraus geschlossen werden, daß der angerufene Mobilfunkteilnehmer derzeit nicht erreichbar ist. Dies kann andere Reaktionen des Dienstes auslösen.

Solcherart verwendbare Nachrichten sind in Mobilfunknetzen einzeln bereits bekannt, es ist bisher allerdings noch keine Kombination in der erfindungsgemäßen Art erfolgt, um so an eine Ortsinformation des B-Teilnehmers für die Dienstezentrale (oder auch das Teilnehmerverzeichnis) zu gelangen.

Weitere Ausgestaltungsformen der Erfindung sind in den Unteransprüchen zu finden.

In einer ersten Ausgestaltungsform wird die zweite Nachricht in einem einstellbaren Zeitabstand (beispielsweise im Sekundenbereich) von der ersten Nachricht initiiert, um sicherzustellen, daß die erste Nachricht genügend Zeit hatte, an den Adressaten ausgeliefert zu werden und vor allem die gewünschten Aktualisierungen der Ortsinformation in dem Teilnehmerverzeichnis auszulösen.
In einer weiteren vorteilhaften Ausgestaltungsform der Erfindung ist der Inhalt der erste Nachricht leer. Dies bedeutet, daß dem solcherart adressierten B-Teilnehmer kein Inhalt übermittelt wird, sondern diese Nachricht allein zur Durchführung der Ermittlung der Ortsinformation genutzt wird, was von dem Dienstanbieter in der Regel gewünscht ist.
Weiterhin kann die Dienstezentrale nach Auswertung der Ortsinformation und vor allem deren Aktualität entscheiden, daß die Prozedur wiederholt werden muss, und zuerst die erste Nachricht wiederholen um dann mittels der zweiten Nachricht nochmals die Ortsinformationen abzufragen.

### Kurzbeschreibung der Zeichungen

- Figur 1: zeigt eine schematische Darstellung der durch die von der Dienstezentrale SCP initiierte Abfrage betroffenen Netzelemente, sowie den Informationsfluß der Nachrichten zwischen diesen Netzelementen und
- Figur 2: zeigt ein Ablaufdiagramm des erfindungsgemäßen Verfahrens und
- Figur 3: zeigt ein zweites Ablaufdiagramm.

### Beschreibung weiterer Ausgestaltungsformen

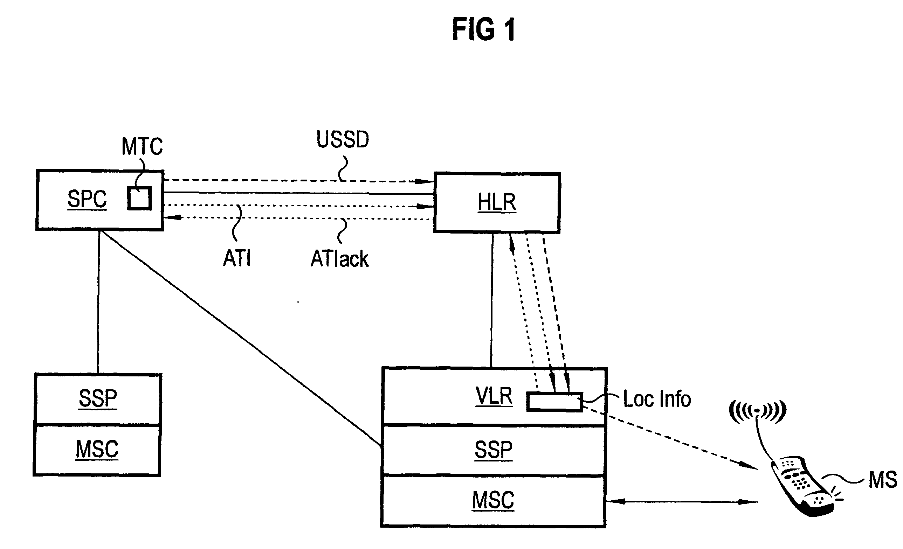

In Figur 1 sind diejenigen Elemente eines Mobilfunknetzes dargestellt, die bei der Ausführung eines MTC-IN-Dienstes benötigt werden. Das zugrundeliegende zellulare Mobilfunknetz basiert in diesem Ausführungsbeispiel auf den GSM Standards, dies stellt aber keine Einschränkung auf das erfindungsgemäße Verfahren dar.

Das Dienstprogramm (die sogenannte Dienstelogik) MTC ist in diesem Beispiel in einer Dienstezentrale SCP ablauffähig vorhanden. Die Dienstezentrale SCP in einem Intelligenten Netz hat als Aufgaben unter anderem: das schnelle Umsetzen einer ersten Rufnummer in eine Zielrufnummer (Adresse) und die Ausführung der Applikationen, das Entgegennehmen (vom SSP) und Weiterleiten von Verbindungsinformationen und die Gebührenerfassung.

Die Funkvermittlungseinrichtung MSC dient der Verbindungssteuerung vom und zum mobilen Teilnehmer MS, der sich in der MSC Area befindet. Die integrierten MSC-Funktionen entsprechen denen des Dienstevermittlungsknotens SSP und den Verarbeitungsfunktionen der Dienstezentrale SCP in einem Intelligenten Netz IN.

Die Datenbank-Einrichtungen HLR und VLR sind Aufenthaltsregister und beinhalten alle individuellen Teilnehmerdaten, die für die Dienstenutzung relevant sind. Diese Aufenthaltsregister werden gleichermassen auch für ISDN, PSTN, PCN oder auch UMTS verwendet.
Das Heimatregister HLR beinhaltet alle semipermanenten und temporären Daten: Teilnehmerinformationen und Betriebsmerkmale, die für eine Verbindung von Bedeutung sind. Sie verfügen über die Datenbasis für die Systemsteuerung der Dienstabläufe und ihre Verwaltung, sie ist die zentrale Master-Datenbank. Die Daten im HLR sind vor allem für den Verbindungsaufbau relevant. Im HLR ist auch die Adresse des gerade aktuellen Besucherregisters VLR vermerkt.
Das Besucherregister VLR ist eine lokale Datenbank, sie beinhaltet die Teilmenge an Daten über Teilnehmer, die sich in ihrem Bereich aufhalten, einschließlich des aktuellen Aufenthaltsortes LocInfo, die für die Call-Processing-Funktionen (also die Verbindungsbearbeitung) von Bedeutung sind. Die Daten werden vor allem beim Roaming von den Endgeräten (MS) und vom HLR dynamisch aktualisiert.
HLR und VLR können Daten austauschen mit Hilfe des Protokolls MAP (Mobile Application Part, siehe dazu auch GSM 09.02), ebenso zu den MSCs.
Um die erste Nachricht nun zu verschicken, in der Absicht, die Ortsinformation LocInfo in dem Besucherregister VLR zu aktualisieren, wird von dem SCP eine USSD Nachricht, die eine leere "Dummy" Nachricht sein kann, ausgesendet, Beispielsweise "**666#". Dabei ist "666" der Service Code für den Dummy String, und diesem folgt keine weitere Information mehr.
Eine Beschreibung für die USSD Nachrichten befindet sich in der Spezifikation GSM 03.90. Insbesondere ist es möglich, daß die USSD Nachricht vom SCP ausgelöst werden kann ("Network initiated unstructured supplementary service"), ohne daß vorher ein Mobilfunkteilnehmer eine entsprechende USSD Nachricht abgesendet hat.
Das HLR leitet die USSD zum VLR/MSC weiter, bei dem der Mobilfunkteilnehmer MS seinen letzten Kontakt mit dem Netz hatte. Dort versucht das Netz, den USSD zum Mobilfunkteilnehmer weiterzuleiten, d. h. er führt ein Paging aus. Bei erfolgreicher Ermittlung des Aufenthaltsortes wird die Ortsinformation LocInfo in dem Besucherregister VLR aktualisiert. Bei Mißerfolg kann die Versendung der USSD Nachricht wiederholt werden. Ist es nicht möglich, die USSD Nachricht auszuliefern, so verfällt diese, die Ortsinformation wird nicht aktualisiert.
Zur Abfrage der nun aktualisierten Ortsinformation wird nun eine zweite Nachricht von dem Dienst MTC ausgesendet. Hierfür kann beispielsweise die "AnyTimeInterrogation" ATI des MAP Protokolls verwendet werden. Das HLR leitet die ATI an das VLR weiter (Provide_Subscriber_Information). Es liefert dann als Antwort ATIack die im VLR gespeicherte Ortsinformation LocInfo zurück, sowie eine AgeOfLocationInformation, welche die Aktualität der Information signalisiert.

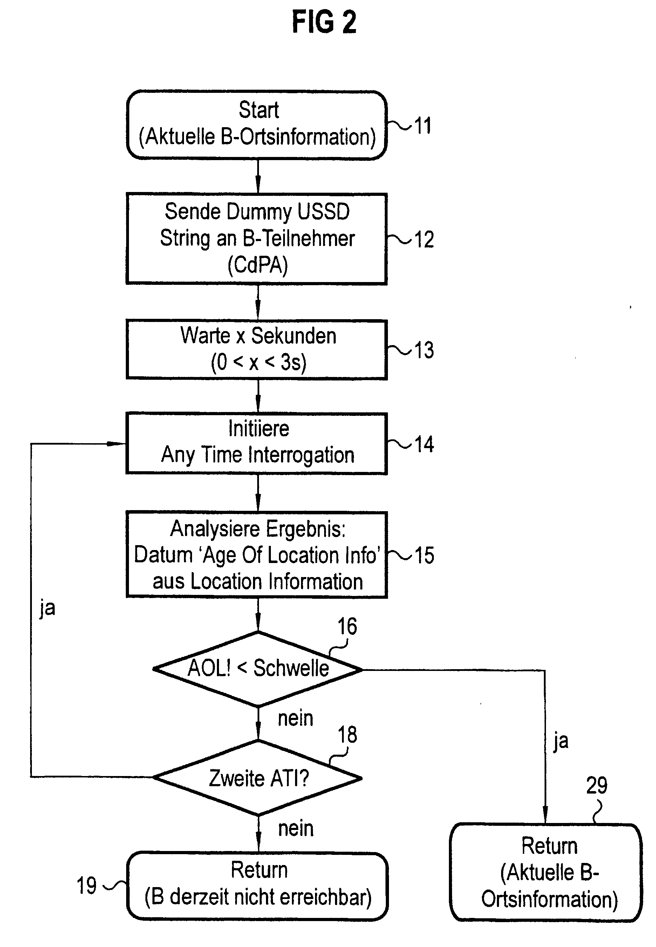

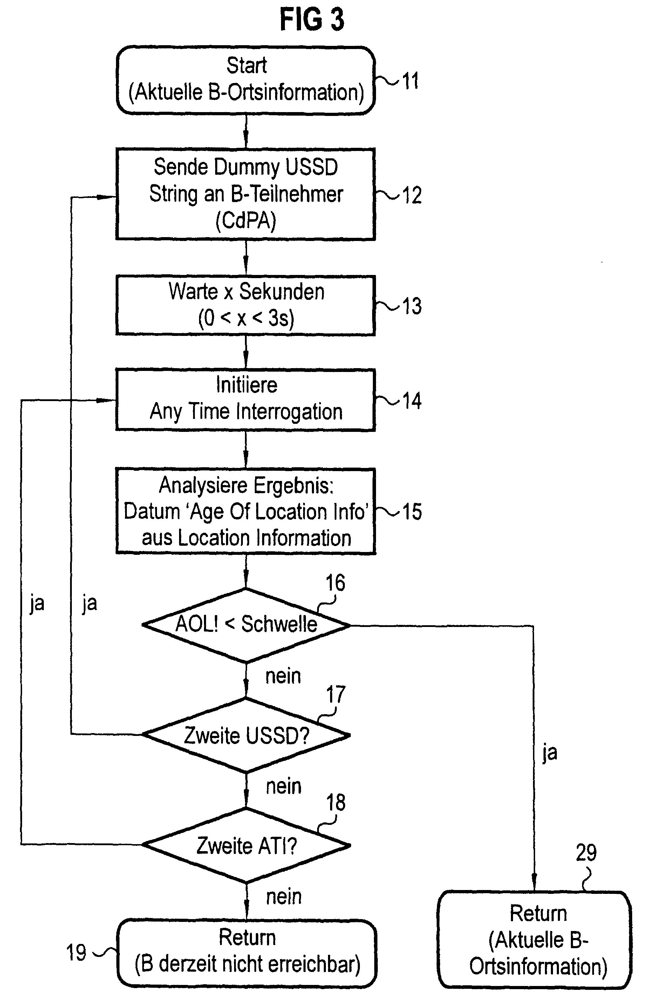

Figur 2 und Figur 3 veranschaulichen den Verfahrensablauf in einem Ablaufdiagramm. Ausgegangen wird von einer Situation, bei der ein Bedarf nach aktueller Ortsinformation für einen Teilnehmer existiert, 11. Daraufhin wird, wie bereits oben beschrieben, eine USSD Nachricht an den gesuchten Teilnehmer gesendet, 12. Danach wird eine (einstellbarer) Zeitdauer gewartet, in diesem Beispiel bis 3 Sekunden, 13. Nach diesem Zeitraum wird die zweite Nachricht, eine ATI Abfrage ausgelöst, 14. Die in der Antwort enthaltene Ortsinformation wird auf ihr Alter, AgeOfLocationInformation AOLI hin untersucht, 15. Es wird beispielsweise mit einem Schwellwert verglichen, 16. Ist die Information aktuell genug, so wird die ermittelte Ortsinformation als aktuelle Ortsinformation erkannt und zurückgeliefert, beispielsweise an den MTC Dienst, 29. Anderenfalls kann wahlweise nochmals eine Abfrage geschickt werden, 18, oder auch zuerst noch eine zweite USSD, 17.
Schlägt dies alles fehl, so wird der gesuchte Teilnehmer als derzeit nicht erreichbar markiert.

Dieses Verfahren hat den Vorteil, daß auch ohne die Einführung weiterer teurer Technologien eine Ortsinformation erhalten werden kann, die in den meisten Fällen (d. h. für die meisten MTC-Dienste) ausreichend genau ist. Beispielsweise steht ab der Siemens Switch Release SR9 dem SCP die benötigte "Network Initiated USSD" zur Verfügung.

### Literatur

### GSM 09.02 (ETSI TS 100 974)

Digital cellular telecommunication system (Phase 2+);
Mobile Application Part (MAP) specification
Version 7.1.0 Release 1998

### GSM 03.90 (ETSI TS 100 549)

Digital cellular telecommunication system (Phase 2+);
Unstructured Supplementary Service Data (USSD) 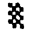 Stage 2
Version 7.0.0 Release 1998

### GSM 03.78 (ETSI TS 101 441)

Digital cellular telecommunication system (Phase 2+);
Customised Applications for Mobile network Enhanced Logic (CAMEL) Phase 2; Stage 2
Version 6.4.0 Release 1997

### Abkürzungsverzeichnis

- ATI: AnyTimeInterrogation
- HLR: Home Location Register (Heimatverzeichnis)
- IN: Intelligent Network (Intelligentes Netz)
- LocInfo: Location Information (Ortsinformation)
- MAP: Mobile Application Part
- MS: Mobile Station (Mobiltelefon)
- MSC: Mobile Switching Center (Mobilvermittlungsstelle, Funkvermittlungseinrichtung)
- MTC: Mobile Terminating Call
- PCN: Personal Communication Network
- SCP: Service Control Point (Dienstezentrale)
- UMTS: Universal Mobile Telecommunications System
- SSP: Service Switching Point (Dienstevermittlungsstelle)
- USSD: Unstructured Supplementary Service Data
- VLR: Visitor Location Register (Besucherverzeichnis)

## Patentansprüche

1. Verfahren zur Bereitstellung von Information über den aktuellen Aufenthaltsort eines Endgerätes (MS) für einen Telekommunikationsdienst
in einem Mobilfunknetz, in dem mindestens eine Vermittlungsstelle (MSC) mit einem Teilnehmerverzeichnis (VLR) existiert,
bei dem
- von der Dienstezentrale (SCP) eine erste Nachricht (USSD) an das Endgerät (MS) gesendet wird, und
- die Ortsinformation im Teilnehmerverzeichnis überprüft wird
- von der Dienstezentrale (SCP) eine zweite Nachricht (ATI) an das Teilnehmerverzeichnis (VLR) gesendet wird,
- das Teilnehmerverzeichnis (VLR) eine Antwort (ATIack) an die Dienstezentrale (SCP) sendet, welche eine Ortsinformation und eine Indikation über die Aktualität dieser Ortsinformation enthält,
- der Telekommunikationsdienst die in der eingegangenen Antwort des Endgerätes enthaltene Ortsinformation auswertet.

2. Verfahren zur Bereitstellung von Ortsinformation für einen Telekommunikationsdienst nach Patentanspruch 1,
**dadurch gekennzeichnet, daß**
die zweite Nachricht einen einstellbaren Zeitabstand nach der ersten Nachricht abgesendet wird.

3. Verfahren nach Patentanspruch 1 oder 2,
**dadurch gekennzeichnet, daß**
die erste Nachricht (USSD) leer ist.

4. Verfahren nach einem der vorigen Patentansprüche,
**dadurch gekennzeichnet, daß**
- die erste Nachricht (USSD) an die Vermittlungsstelle (MSC) mit Teilnehmerverzeichnis (VLR) weitergeleitet wird, mit der das Endgerät (MS) den letzten Kontakt zu dem Telekommunikationsnetz hatte, und
- diese Vermittlungsstelle versucht, die erste Nachricht an das Endgerät (MS) weiterzuleiten, und
- wenn die Weiterleitung erfolgreich ist, der Eintrag der Ortsinformation (LocInfo) in dem Teilnehmerverzeichnis aktualisiert wird.

5. Verfahren nach einem der vorigen Patentansprüche,
**dadurch gekennzeichnet, daß**
- die Antwort (ATIack) enthaltene Ortsinformation nicht aktuell ist, und
- mindestens die zweite Nachricht (ATI) nochmals gesendet wird.

## Claims

1. Method for providing information on the current location of a terminal device (MS) for a telecommunications service
in a mobile network, in which at least one Mobile Switching Centre (MSC) with a Visitor Location Register (VLR) exists,
in which
- a first message (USSD) is transmitted from the Service Control Point (SCP) to the terminal device (MS), and
- the location information is checked in the Visitor Location Register,
- a second message (ATI) is transmitted from the Service Control Point (SCP) to the Visitor Location Register (VLR),
- the Visitor Location Register (VLR) transmits a reply (ATIack) to the Service Control Point (SCP), said reply containing location information and an indication as to whether this location information is up-to-date,
- the telecommunications service evaluates the location information contained in the reply received from the terminal device.

2. Method for providing location information for a telecommunications service according to Claim 1,
**characterized in that**
the second message is transmitted a definable time interval after the first message.

3. Method according to Claim 1 or 2,
**characterized in that**
the first message (USSD) is a dummy.

4. Method according to one of the preceding claims,
**characterized in that**
- the first message (USSD) is forwarded to the Mobile Switching Centre (MSC) with the Visitor Location Register (VLR) with which the terminal device (MS) had the last contact with the telecommunications network, and
- this Mobile Switching Centre attempts to forward the first message to the terminal device (MS), and
- if the forwarding is successful, the entry of the location information (LocInfo) in the Visitor Location Register is updated.

5. Method according to one of the preceding claims,
**characterized in that**
- the location information contained in the reply (ATIack) is not up-to-date, and
- at least the second message (ATI) is retransmitted.

## Revendications

1. Procédé de mise à disposition d'informations sur le lieu de séjour momentané d'un terminal (MS) pour un service de télécommunication dans un réseau de radiotélécommunication mobile, dans lequel il existe au moins un centre de commutation (MSC) ayant un enregistreur de localisation d'abonnés (VLR),
dans lequel
- un premier message (USSD) est émis au terminal (MS) par la centrale de services (SCP), et
- l'information de localisation est vérifiée dans l'enregistreur de localisation d'abonnés,
- un deuxième message (ATI) est émis par la centrale de services (SCP) à l'enregistreur de localisation d'abonnés (VLR),
- l'enregistreur de localisation d'abonnés (VLR) émet une réponse (ATlack) à la centrale de services (SCP), laquelle contient une information de localisation et une indication sur l'actualité de cette information de localisation,
- le service de télécommunication évalue l'information de localisation contenue dans la réponse reçue du terminal.

2. Procédé de mise à disposition d'informations de localisation pour un service de télécommunication selon la revendication 1,
**caractérisé en ce que**
le deuxième message est émis après le premier message avec un écart de temps réglable.

3. Procédé selon la revendication 1 ou 2,
**caractérisé en ce que**
le premier message (USSD) est vide.

4. Procédé selon l'une quelconque des revendications précédentes,
**caractérisé en ce que**
- le premier message (USSD) est transmis au centre de commutation (MSC) avec l'enregistreur de localisation d'abonnés (VLR), au moyen duquel le terminal (MS) a eu le dernier contact avec le réseau de télécommunication, et
- ce centre de communication tente de transmettre le premier message au terminal (MS), et
- si la transmission a réussi, l'inscription de l'information de localisation (LocInfo) est actualisée dans l'enregistreur de localisation d'abonnés.

5. Procédé selon l'une quelconque des revendications précédentes,
**caractérisé en ce que**
- l'information de localisation contenant la réponse (ATlack) n'est pas actuelle, et **en ce qu'**
- au moins le deuxième message (ATI) est émis encore une fois.
